(19)

Europäisches
Patentamt
European
Patent Office
Office européen
des brevets

(11) **EP 2 438 810 A1**

(12) **EUROPEAN PATENT APPLICATION**
published in accordance with Art. 153(4) EPC

(43) Date of publication:
**11.04.2012 Bulletin 2012/15**

(21) Application number: **10783414.5**

(22) Date of filing: **02.06.2010**

(51) Int Cl.:
***A01G 31/00*** (2006.01)    ***A01G 7/00*** (2006.01)

(86) International application number:
**PCT/JP2010/059376**

(87) International publication number:
**WO 2010/140632 (09.12.2010 Gazette 2010/49)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **03.06.2009 JP 2009134375**

(71) Applicant: **Nihon Yamamura Glass Co., Ltd.
Hyogo 660-8580 (JP)**

(72) Inventors:
• **KIMURA, Shuji
Amagasaki-shi
Hyogo 660-8580 (JP)**
• **KOYAMA, Ryohei
Amagasaki-shi
Hyogo 660-8580 (JP)**

• **MORIOKA, Ai
Amagasaki-shi
Hyogo 660-8580 (JP)**
• **ITO, Hiromichi
Kobe-shi
Hyogo 657-0013 (JP)**
• **UNO, Yuichi
Kobe-shi
Hyogo 657-0013 (JP)**

(74) Representative: **Behnisch, Werner
Isarpatent
Postfach 44 01 51
80750 München (DE)**

(54) **METHOD FOR PRODUCING HIGH FUNCTIONALITY PLANTS IN HYDROPONIC CULTIVATION**

(57)    A method for production of vegetables is disclosed by which the content of beneficial ingredients (nutritious ingredients, flavor ingredients, and the like), such as ascorbic acid, sugar, glucosinolates, polyphenol, chlorophyll, etc., is increased, while nitrate ion content is decreased, and, in the case of anthocyanin producing vegetables, anthocyanin production is enhanced. The method for production is **characterized in that** the vegetables, after having grown and immediately before harvesting, are subjected, to conditioned cultivation for not less than one day in which the vegetables are hydroponically cultivated with water instead of a nutrient solution and with photoperiod set at not less than 17 hours.

**EP 2 438 810 A1**

**Description**

TECHNICAL FIELD

The present invention relates to a method for production of vegetables by hydroponics under artificial lighting, more specifically to a method for production of vegetables by hydroponics which method leads to an increase in the content of beneficial ingredients such as antioxidant ingredients, nutritious ingredients, and flavoring ingredients, and to a decrease in the content of nitrate ion, and, in the case of vegetables producing anthocyanin pigments, to an increase in the content of the pigments, thereby improving color development.

BACKGROUND ART

Hydroponics, which is a method for cultivating plants using a nutrient solution, instead of soil, containing minerals and other ions, has such advantages that it requires no agricultural land and enables cultivation of plants under proper conditions, i.e., under a complete control of growth conditions such as lighting, water supply and temperature, regardless of location or natural environment as far as a facility is available, thus also allowing plants to grow rapidly with increased production efficiency, and allowing easier control of the timing for harvesting. Thus, hydroponics is widely utilized in production of agricultural commodities such as vegetables.

However, while vegetables cultivated by hydroponics under artificial lighting grow rapidly, they pose a drawback that they are likely to contain a lowered amount of antioxidant compounds, such as ascorbic acid (vitamin C), and of various nutritious ingredients. On the other hand, it is known that in humans, bodily requirement for ascorbic acid increases under stressed conditions, such as when suffering from infectious diseases, like influenza. Thus, with a growing tide of health consciousness, there has been a tendency that vegetables with high content of vitamin C are liked. Thus, there is a need for a method in hydroponics which enables production of vegetables with high content of ascorbic acid, with efficiency and at low cost.

Vegetable usually contain nitrate ion. When it is contained in a high amount, nitrate ion not only may cause a bitter taste but may lead to production of carcinogenic substances. It therefore is preferred that vegetables are produced with lowered content of nitrates. Already In EU (European Union), the maximum allowable levels of nitrates in vegetables have been ruled, according to which the maximum level of nitrate in head-forming lettuce cultivated in a facility, and in other types of lettuce (lettuce, red-tip leaf lettuce, cos lettuce, and the like) cultivated outdoors and harvested from April to September, for example, should be not more than 2,500 mg $NO_3^-$/kg.

So far, studies have been made to increase the level of nutritious ingredients in vegetables cultivated by hydroponics, including antioxidant ingredients such as ascorbic acid. For example, Patent Application Publication No. 2004-305040 and Patent Application Publication No. 2008-86272 (Patent Documents 1 and 2, respectively) disclose employment of artificial irradiation with ultraviolet having its peak near 315 nm to increase the content of functional ingredients like vitamin C and tocopherol. These methods, however, have their own drawbacks that they are costly because they require, besides general lighting equipment, additional equipment including particular UV lamps, which adds to energy cost and requires elaborate maintenance and control to adjust them to an optimal light intensity.

Meanwhile, a hydroponic method is disclosed in Japanese Patent Application Publication No. H6-105625 (Patent Document 3), in which vegetables are hydroponically cultivated with a hydroponic fertilized solution (Solution 1) containing nitrate nitrogen (which is nitrogen in the form of nitrate ion) until they grow to a certain degree, and then hydroponically cultivated with another fertilized hydroponic solution (Solution 2), a solution containing nitrate nitrogen lowered to not more than 10 mg/L and chelated iron elevated to not less than 10 mg/L, for 5 days, a period during which nitrate nitrogen content of the vegetables becomes substantially zero, and hydroponic cultivation is continued with Solution 2. The document shows that the contents of carbohydrates and vitamin C both rapidly increase during the additional hydroponic cultivation continued after the 5-day hydroponic cultivation with Solution 2 to bring the nitrate nitrogen content of the vegetables substantially to zero. However, according to this method, vegetables must be cultivated with a nitrate-free fertilized hydroponic solution for 5 days in a preceding step to later obtain increase in the contents of carbohydrates and vitamin C in the vegetables. To this number of the days are added one or two days during which cultivation is continued with the same solution to increase the contents of carbohydrates and vitamin C in the vegetables. Thus, cultivation with the nitrate-free hydroponic solution is be continued for about a week, which is not desirable because the vegetables just before shipment are to be placed in a substantial length of growth inhibiting period.

On the other hand, with certain vegetables, such as red lettuce, there is observed a phenomenon that development of their color development by anthocyanins which occurs when cultivated outdoors, does not occur when they are cultivated by hydroponics under artificial lighting. This has been an obstacle to wider utilization of hydroponics under artificial lighting for production of vegetables. To address this, it is described in Japanese Patent Application Publication No. 2003-204718 (Patent Document 4) that the content of anthocyanins in red-tip leaf lettuce can be increased in hydroponics by cultivating it for at least 3 days under white light during the day (from 6 to 18 o'clock) and under blue light having wavelength of 400-500 nm for at least 6 hours during the night (from 18 to the next 6 o'clock). However, this method also requires installation of blue light sources in addition to white ones, which becomes a factor increasing production cost of vegetables.

Meanwhile, though not by hydroponics, Japanese Patent Application Publication No. 2005-245243 (Patent Document 5) discloses a method for denitrification processing of vegetables, in which vegetables cultivated under natural conditions are irradiated with light at 300-600 lux from incandescent electric bulbs in the night for at least 3 days prior to harvesting, during which no fertilizer is applied, and/or in a period of not more than one week after harvesting, thereby reducing the content of nitrate nitrogen in carrot and spinach. It also discloses that in carrying out the method after harvesting, loss of their freshness can be effectively prevented by keeping their roots submerged in water.

PRIOR ART DOCUMENTS

PATENT DOCUMENTS

[Patent Document 1] Japanese Patent Application Publication No. 2004-305040
[Patent Document 2] Japanese Patent Application Publication No. 2008-86272
[Patent Document 3] Japanese Patent Application Publication No. H06-105625
[Patent Document 4] Japanese Patent Application Publication No. 2003-204718
[Patent Document 5] Japanese Patent Application Publication No. 2005-245243

SUMMARY OF INVENTION

PROBLEM TO BE SOLVED BY INVENTION

Against the above-mentioned background, the objective of the present invention is to provide a method for production of vegetables by hydroponics under artificial lighting, which method enables, without requiring installation of additional particular light sources such as ultraviolet lamps or blue light sources, increases in the content of favorable ingredients, such as ascorbic acid content, sugar content, or total sugar content, and lowering the content of nitrate nitrogen, and further, in the case of such types vegetables that produce anthocyanins, enables promotion of production of the pigments and development of vivid red or purple colors.

SOLUTION TO PROBLEM

As a result of studies for the above-mentioned purpose, the inventors of the present invention found that by application of a longer photoperiod (length of time of lighting a day) together with replacement of the hydroponic fertilized solution (nutrient solution) with water in the final step of hydroponic cultivation of vegetables, for one or two days immediately before harvesting, a rapid decrease in nitrate nitrogen content can be brought about, as well as a rapid increase in sugar content, total sugar content, ascorbic acid (vitamin C) content, content of polyphenols, chlorophyll, and/or glucosinolates, and also, in such vegetables that produce anthocyanins and develop colors when cultivated outdoors but so far not by hydroponic cultivation under artificial lighting, promotion of anthocyanin production and development of vivid red or purple colors in them by the pigments. The present invention was completed by further studies based on these findings. Thus, the present invention provides what follows.

1. A method for production of a vegetable by hydroponic cultivation under artificial lighting, wherein the method is **characterized in that** the vegetable, after having grown and immediately before harvesting, is subjected to conditioned cultivation for a period of not less than one day in which the vegetable is hydroponically cultivated with water instead of a nutrient solution and with photoperiod set at not less than 17 hours.

2. The method for production according to 1 above, wherein the period of the conditioned cultivation is not less than 2 days.

3. The method for production according to 1 or 2 above, wherein the photoperiod is not less than 20 hours.

4. The method for production according to one of 1 to 3 above, wherein the period of the conditioned cultivation is not more than 7 days.

5. The method for production according to one of 1 to 4 above, wherein the intensity of light during the photoperiod is at least 9000 lux.

6. The method for production according to one of 1 to 5 above, wherein nitrate ion content of the vegetable decreases during the conditioned cultivation.

7. The method for production according one of 1 to 6 above, wherein the content of sugar, total sugar, ascorbic acid, anthocyanins, polyphenols, chlorophyll, and/or glucosinolates increases during the conditioned cultivation.

8. A vegetable produced by the method for production according to one of 1 to 7 above.

EFFECTS OF INVENTION

According to the present invention, hydroponically cultivated vegetables with lowered nitrate ion content can be produced in a low-cost manner which requires no additional lighting equipment like ultraviolet lamps, while promoting a rapid increase in the content of nutritional ingredients or flavoring ingredients, such as ascorbic acid, sugar or glucosinolates, total sugar content, content of polyphenols and/or chlorophyll. In the case of leaf vegetables, thickness and depth of color of their leaves can also be improved. Furthermore, in the case such vegetables that produce anthocyanins when cultured outdoors, those vegetables with vivid red or purple colors can be produced through promoting production of the pigments, without requiring installation of additional light sources, such as blue-light souses.

BRIEF DESCRIPTION OF DRAWINGS

[Fig. 1] Fig. 1 is a graph showing the changes in nitrate ion content over time in the plant in Example 1-1.
[Fig. 2] Fig. 2 is a graph showing the changes in ascorbic acid content over time in the plant in Example 1-1.
[Fig. 3] Fig. 3 is a graph showing the changes in sugar content over time in the plant in Example 1-1.
[Fig. 4] Fig. 4 is a graph showing the changes in leaf thickness of the plant over time in Example 1-1.
[Fig. 5] Fig. 5 is a graph showing the changes in polyphenol content over time in the plant in Example 1-2.
[Fig. 6] Fig. 6 is a graph showing the changes in chlorophyll content over time in the plant in Example 1-3.
[Fig. 7] Fig. 7 is a graph showing the relation between nitrate nitrogen concentration in the hydroponic liquid and nitrate ion concentration in the plant in Example 2.
[Fig 8] Fig. 8 is a graph showing nitrate ion content of the plant after hydroponic cultivation for one day in Example 3.
[Fig. 9] Fig. 9 is a graph showing the ascorbic acid content of the plant after hydroponic cultivation for one day in Example 3.
[Fig. 10] Fig. 10 is a graph showing sugar content of the plant after hydroponic cultivation for one day in Example 3.
[Fig. 11] Fig. 11 is a graph showing anthocyanin content of, and the hue value of the plant after cultivation for 4 days under the conditions described in Example 4-1 ("FW" stands for "Fresh Weight").
[Fig. 12] Fig. 12 is a graph showing total sugar content of the plant after cultivation for 4 days under the conditions described in Example 4-1.
[Fig. 13] Fig. 13 is a graph showing anthocyanin content of, and hue value of the plant after cultivation for one day under the conditions described in Example 4-2.
[Fig. 14] Fig. 14 is a graph showing anthocyanin content and hue value of the plant after cultivation for 3 days under the conditions described in Example 4-2.
[Fig. 15] Fig. 15 is a graph showing nitrate ion content of the plant under the conditions described in Example 5.
[Fig. 16] Fig. 16 is a graph showing the changes in nitrate ion content of the plant under the conditions described in Example 6.
[Fig. 17] Fig. 17 is a graph showing the changes in sugar content of the plant under the conditions described in Example 6.
[Fig. 18] Fig. 18 is a graph showing the changes in glucosinolate content of the plant under the conditions described in Example 7.
[Fig. 19] Fig. 19 is a graph showing the changes in nitrate ion content of the plant under the conditions described in Example 7.

DESCRIPTION OF EMBODIMENTS

In the present invention, the term "hydroponically cultivated vegetable" means a vegetable grown and obtained by hydroponic cultivation.

In the present invention, the term "vegetables" include "leaf vegetables", "root vegetables", and "fruit vegetables". The term "leaf vegetables" means those vegetables whose leaves and stems are mainly used for food, and includes, for example, but is not limited to, lettuce, "mizuna" (*Brassica rapa* var. *nipposinica*), spinach, garland chrysanthemum (*Glebionis coronaria*), °'Komatsuna" (*Brassica rapa* var. *peruiridis*), *Brassica rapa* var. *chinensis,* cabbage, *Brassica rapa* var. *glabra,* Chinese basil (*Perilla. frutescens* var. *crispa*), leaf mustard (*Brassica juncea*), kale, and herbs (rucola, basil, etc.). The term "root vegetables" means those vegetables whose part resting under the soil when cultivated outdoors, such as roots and subterranean stems, are mainly used for food, and includes, for example, but is not limited to, Japanese raddish (*Raphanus sativus* var. *longipinncatus*), carrot, turnip, burdock (*Arctium lappa* L.), potato, sweet potato, eddoe (*Colocasia esculenta*), and lotus root. And the term "fruit vegetables" means those vegetables whose fruits or seeds are mainly used for food, and includes, for example, but is not limited to", strawberry, tomato, cucumber, and eggplant. Besides, leaves and stems, which are mainly used for food in the case of leaf vegetables, are classified as source parts of the plant, where photosynthesis and reduction of nitrate take place, while swollen roots, swollen subterranean stems and fruits, which are mainly used as food in the case of root vegetables and fruit vegetables, are classified as sink parts, which store the nutrients coming from the source parts and grow.

According to the present invention, any of various hydroponic conditions known in the art (temperature, nutrient solution, photoperiod) and length of days for which growth is allowed may be chosen and employed as desired without particular limitation in hydroponic cultivation (hereinafter referred to as "growth cultivation") which is performed until the start of hydroponic cultivation performed immediately before harvesting in which the nutrient solution is replaced with water and photoperiod is set at a predetermined length (e.g., not less than 17 hours) (hereinafter referred to as "conditioned cultivation"), for it is enough that growth cultivation allows the vegetables to grow sufficiently. For example, photoperiod (length of time of lighting a day) during growth cultivation may, but is not necessarily, be set at 12 hrs, 14 hrs, 15 hrs, 16 hrs, and the like.

Conditioned cultivation may be performed for one to a few days immediately before shipping. For example, hydroponic cultivation for only one day with photoperiod set at 17 hours will be effective to lead to a lowered nitrogen ion content and an increased content of ascorbic acid and sugar in the plant. Photoperiod may be set at any length of time not less than 17 hours as desired, e.g., 18 hrs, .... to 24 hrs (i.e., without dark period), and the above effect will become greater in correlation to the length of the photoperiod. Conditioned cultivation may be performed for one day, but it may be performed for more days. For example, if conditioned cultivation is performed for 2-5 days, both effect of lowering nitrate ion content and increasing sugar content of the plant will become greater in correlation to the number of days for which cultivation is performed. Further, there is found no reduction in increasing rate of the effect during this period, indicating that conditioned cultivation may be performed up to about one week.

In the case of vegetables which produce anthocyanins and develop colors when cultivated outdoors, conditioned cultivation can lead to increase in the content of anthocyanins and improve color development. Increase in the anthocyanin content and augmentation of color development caused thereby will also become more evident as the number of days of conditioned cultivation is increased and photoperiod extended. If vividly colored appearance is sought, conditioned cultivation, for example, in the case where photoperiod is set at 17 hours, is preferably performed for not less than 2 days, more preferably for not less than 3 days. In the case where photoperiod is set at not less than 20 hours, conditioned cultivation performed for one day will be sufficient, though more effective if it is performed for a longer period.

Intensity of light during conditioned cultivation is preferably not less than 9000 lux, more preferably not less than 9500 lux, and still more preferably 10000 lux. There is no particular upper limit as to the intensity of light, unless it is so intense as to cause damages to the plant body. Thus, it may be set, for example, as 20000 lux or 19000 lux, 18000 lux, and so on.

Nitrate nitrogen content of water which is used as the hydroponic liquid in conditioned cultivation is preferably not more than 15 ppm, more preferably not more than 10 ppm, and still more preferably not more than 8 ppm. Use of tap water as water for this will be convenient. Presence of minerals at such levels as found in tap water will do no harm. Water containing such small amounts of nitrate nitrogen and minerals is also included in the term "water" properly used instead of a nutrient solution in conditioned cultivation.

EXAMPLES

The present invention will be described in more detail below with reference to typical examples. It is not intended, however, that the present invention be limited to the description of Examples.

The effects of the photoperiod and hydroponic liquid on the properties of vegetables at the time of harvesting were examined. In the experiments described below, the following conditions were commonly employed, unless otherwise mentioned.

    (1) Light source: white fluorescent light
    (2) Fertilizer: Otsuka House Formula SA (Table 1)

[Table 1]

Table 1

| Ingredient | Content (ppm) |
|---|---|
| Total nitrogen of which<br>Ammonium nitrogen<br>Nitrate nitrogen | 245<br>8<br>237 |
| $P_2O_5$ | 105 |
| $K_2O$ | 480 |
| CaO | 230 |
| MgO | 60 |
| MnO | 0.75 |
| $B_2O_3$ | 1.1 |
| Fe | 2.3 |
| Cu | 0.03 |
| Zn | 0.09 |
| Mo | 0.03 |

(3) Lighting period/Dark period: 14 hrs/ 10 hrs
(4) $CO_2$ fertilizer application: 1500 ppm

[Growth Cultivation] Seeding and Raising

Seeds used for the experiment were seeded on a urethane medium and hydroponically cultivated for 5 days at an irradiation intensity of 5000-5500 lux and at a room temperature of 18-20° C, while watering 6 times a day with a nutrient solution adjusted to EC (electric conductance) = 1.0 mS/cm to grow into plant bodies. The plant bodies then were fix planted in such a manner that their roots were completely submerged, and deep flow hydroponic cultivation was performed with their roots completely submerged in the nutrient solution, at an irradiation intensity of 13000-18000 lux, and at a room temperature of 20° C, with a nutrient solution adjusted to EC = 1.8 mS/cm, until the time when conditioned cultivation was started.

[Example 1-1] Study of the effect of modifying hydroponic liquid and photoperiod on lettuce -1

Following growth cultivation, deep flow hydroponic cultivation was performed with modified hydroponic liquid and photoperiod, and examination was made for any effects which these modification had on nitrate ion content, ascorbic acid content, sugar content, and leaf thickness of the vegetable harvested.

(Method of cultivation)

As lettuce, leaf lettuce was used. After seeding, hydroponic cultivation (growth cultivation) was performed for 30 days, and plant bodies thus raised were allotted to 6 groups at random. As shown in Table 2, the plant bodies of 5 groups of them were subjected to deep flow hydroponic cultivation for 5 days with water (tap water, nitrate nitrogen concentration: not more than 1.29 ppm) which replaced the nutrient solution and with photoperiod set at 12 hrs, 15 hrs, 18 hrs, 21 hrs or 24 hrs (conditioned cultivation). The remaining one group was used as the control group, and deep flow hydroponic cultivation was continued for this for 5 days with photoperiod set at 12 hrs and with the same nutrient solution (nitrate nitrogen concentration: 170 ppm, EC =1.8 mS/cm). The intensity of light was set at 10000-15000 lux for all the groups.

Table 2

|  | 12H (Control) | 12W | 15W | 18W | 21W | 24W |
|---|---|---|---|---|---|---|
| Hydroponic liquid | Nutriment solution | Water | Water | Water | Water | Water |
| Photoperiod | 12 hrs | 12 hrs | 15 hrs | 18 hrs | 21 hrs | 24 hrs |

(Evaluation items and method for evaluation)

1. Measurement of nitrate ion content:

Plant body samples were collected immediately after the conditioned cultivation for 1, 3, or 5 days, and after they were triturated in a mixer with addition of a certain amount of water for dilution, the triturated mixtures thus prepared were centrifuged at 12000 rpm for 1 minute. The supernatants thus obtained were measured for their nitrate ion concentration using RQ Flex (mftd by Fujiwara Scientific Co.), and the content (mg) of nitrate ion per 100 g of plant body was calculated.

2. Measurement of ascorbic acid content:

Plant body samples were collected immediately after the conditioned cultivation for 1, 3, or 5 days, and after triturated in a mixer with addition of a certain amount of 5% metaphosphoric acid for dilution, the triturated mixtures were centrifuged at 12000 rpm for 1 minute. The supernatants thus obtained were measured for their ascorbic acid concentration using RQ Flex (mftd by Fujiwara Scientific Co.), and the content of ascorbic acid (mg) per 100 g of plant body was calculated.

3. Measurement of sugar content (Brix (%)):

Plant body samples were collected immediately after the conditioned cultivation for 1, 3, or 5 days, and after triturated triturated in a mixer with addition of 100 ml of water, the triturated mixtures were centrifuged at 12000 rpm for 1 minute. The supernatants thus obtained were measured for their sugar content using a pocket Brix meter (PAL-1, mftd by Atago Co., Ltd.).

4. Measurement of leaf thickness:

Plant body samples were collected immediately after the conditioned cultivation for 1, 3, or 5 days, and the thickness of their leaves was measured at a point about 5-10 mm away from their leaf tips by Quick Mini (mftd by Mitutoyo Co., Ltd.).

(Results)

1. Nitrate nitrogen ion content:

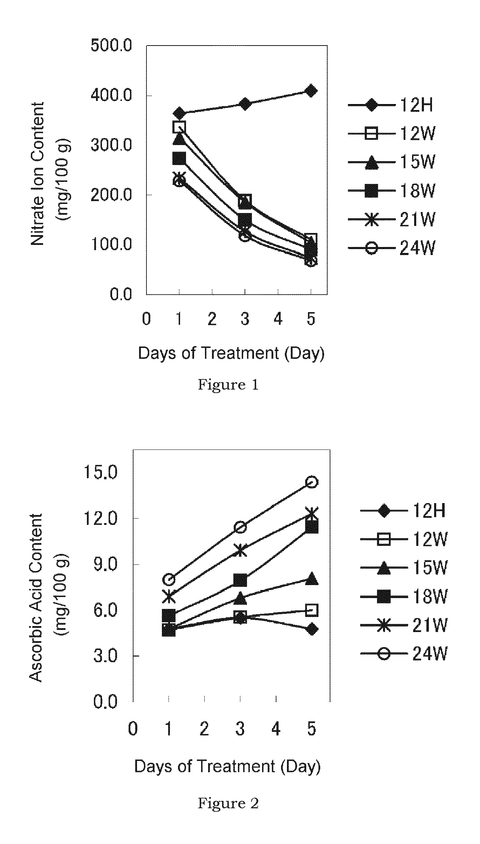

Fig. 1 shows the changes in nitrate ion content over time in the plant bodies. In the figure, "H" denotes that the cultivation was performed with nutrient solution, and "W" with water. The numbers attached before the signs indicate the photoperiod employed (unit: hour) (the same applys in the following Examples).

As seen in Fig. 1, in the control group (12H), for which hydroponic cultivation was performed with the nutrient solution and with the photoperiod set at 12 hrs, nitrate ion content after cultivation for 1, 3 or 5 days was found increased with the number of days of for which the cultivation was made, whereas in each of the groups A-E, for which the hydroponic liquid was changed from nutrient solution to water, nitrate ion content of the plant bodies decreased rapidly, and this decrease in nitrogen ion content was more remarkable in groups with longer photoperiod as well as when cultivation was continued for increased number of days. Specifically, after cultivation for one day, nitrate ion content in Group 12W, for which photoperiod was set at 12 hrs, was found decreased only slightly compared with 12H (control group), for which the same photoperiod was set, whereas, in Group 15W, for which photoperiod was set at 15 hrs, an evident decrease by about 50 mg/ 100 g was observed as compared with the control group, and further in Group 18W, for which photoperiod was set at 18 hrs, a remarkable decrease by about 90 mg/ 100 g as compared with the control group, and in Group 21 and Group 24, for which photoperiod was set at 21 and 24 hrs, respectively, a more remarkable decrease by about 130-135 mg/100 g, respectively, was observed. Further, after the cultivation for 3 days, in all the groups for which the hydroponic liquid was changed from the nutrient solution to water, nitrate ion content was found decreased to less than 1/2 to less than 1/3 of the control group, indicating that groups with the longer photoperiod exhibited the more notable decrease. After the cultivation f or 5 days, nitrate ion content in the groups was found still further decreased, showing further expansion of difference from the control.

2. Ascorbic acid content:

Fig. 2 shows the changes in ascorbic acid content (mg/ 100 g) of the plant bodies of each group. As seen in Fig. 2, while no notable change was observed in ascorbic acid content of the control group (12H) after cultivation for 1, 3, or 5 days, ascorbic acid content of the plant bodies of the other groups, for which the hydroponic liquid was changed from the nutrient solution to water, was found to rapidly increased in correlation to the number of days for which cultivation was performed, and the degree of the increase was more notable in groups with longer photoperiod. Specifically, after the cultivation for 1 day, ascorbic acid content of the plant bodies of Group 24W, for which the photoperiod was set at 24 hrs, was found markedly increased to about 1.7 times the content observed in the control group, and in Group 18W also, for which the photoperiod was set at 24 hrs, a marked increase to about 1.2 times was observed. After the cultivation for 3 days, ascorbic acid content in the groups for which the photoperiod was set at 15-24 hrs was found increased to about 1.2 to 2.1 times the content observed in the control group, and the increase was the more notable in groups with the longer photoperiod. Further, after the cultivation for 5 days, ascorbic acid content was found increased in all the groups except the control group, among which the plant bodies of the groups with the photoperiod of 15 to 24 hrs exhibited ascorbic acid content which was about 1.7 to 3 times the content observed in the control group, in correlation with the length of the photoperiod.

3. Sugar content (Brix %):

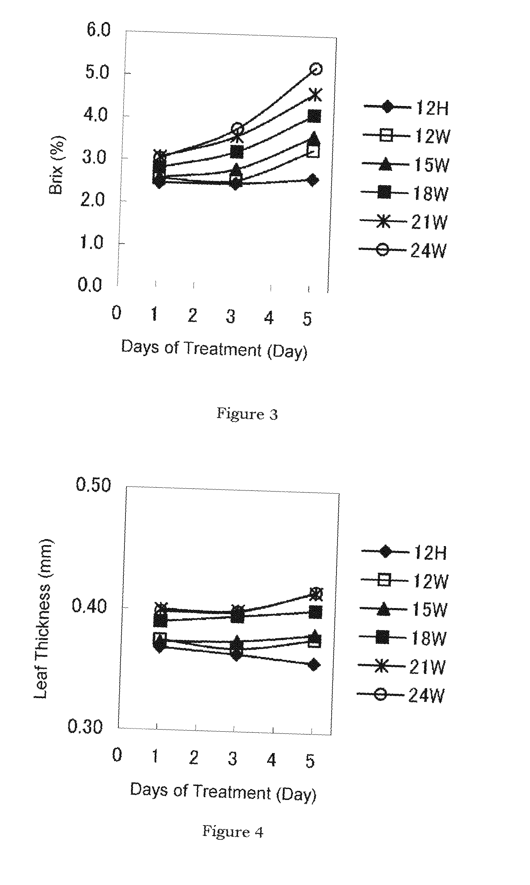

The results are shown in Fig. 3. While little change was observed in sugar content of the plant bodies of the control group during the cultivation period of 5 days, sugar content of the plant bodies of Group 18W, for which photoperiod was set at 18 hrs, was found to be about 1.1 times the content observed in the control, and in Group 21W and Group 24W, for which photoperiod was set at 21 hrs and 24 hrs, respectively, the content was found to be about 1.2 times the content observed in the control group. After the cultivation for 3 days, increase in sugar content of the plants of Group 15W, Group 18W, Group 21W and Group 24W, for which photoperiod was set at 15 hrs, 18 hrs, 21 hrs and 24 hrs, was found more remarkable, and was about 1.1, 1.3, 1.4 and 1.5 times the content observed in the control, respectively. After the cultivation for 5 days, sugar content was found still increased in all the groups except the control group, among which Group 15W, for which photoperiod was set at 15 hrs, Group 18W, for which 18 hrs, Group 21W, for which 21 hrs, and Group 24W, for which 24 hrs, exhibited sugar content about 1.4 times, about 1.6 times, about 1.8 times, and about 2 times, respectively, the content observed in the control group.

4. Leaf thickness:

The results are shown in Fig. 4. It was also observed that leaf thickness became greater than the control group in correlation with the length of the photoperiod, from Group 18W, for which photoperiod was set at 18 hrs to Group 24W, for which photoperiod was set at 24 hrs, and that became more evident as the cultivation was continued for 1 day to 3 days and to 5 days. Though, in general, plants cultivated under artificial lighting, such as with fluorescent lamps, has a drawback that they lack physical strength, the above results show that this drawback can be overcome. Further, it was observed that the plant bodies of these groups were more deeply colored than the plant bodies of the control group, and that even the lowered nitrate nitrogen in the hydroponic liquid resulted in no undesirable effect, such as paling in color, on their external appearance.

[Example 1-2] Study of the effect of modifying hydroponic liquid and photoperiod on lettuce -2

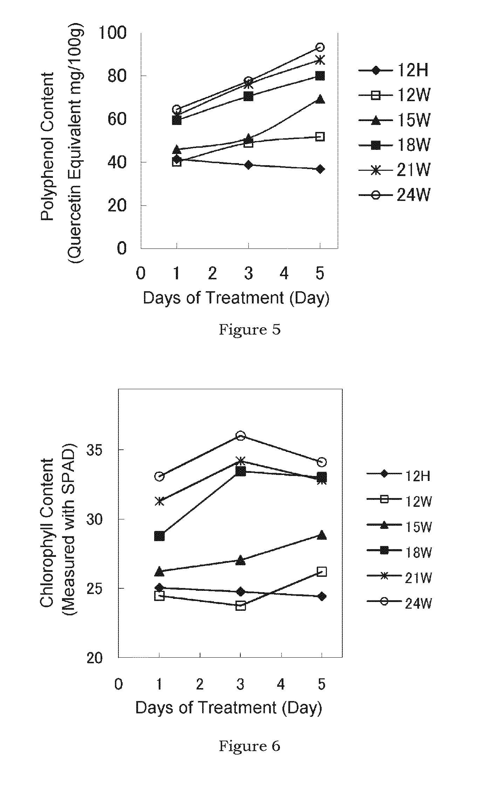

Leaf lettuce was cultivated (growth cultivation and conditioned cultivation) following the same procedure and conditions as in Example 1-1, and polyphenol content of the plant bodies was measured by the following method.
To 1 g of a sample which had been prepared by freezing plant bodies in liquid nitrogen and then pulverizing it was added 10 ml of 80% ethanol, and the mixture was let stand for 2 hours in a cool dark place. After centrifugation at 3000 rpm for 5 minutes, the supernatant obtained was used as the polyphenol extract. Polyphenol content of the extract was measured by Folin-Ciocalteu method. Namely, to 1 ml of the extract was added 1 ml of 1/2 dilution of phenol reagent (mftd by MP Biochemical) and mixed, then 1 ml of 10% sodium carbonate aqueous solution was added, and the mixture was stirred and was let stand for 60 minutes at room temperature. Then, absorbance at 700 nm was measured on a spectrophotometer (UV-160, Shimadzu Corp.). Using quercetin as a reference, the content of polyphenol in the sample was calculated in quercetin equivalent (mg quercetin/ 100 g). The results are shown in Fig. 5.

In Group 18W, for which photoperiod was set at 18 hrs, polyphenol content increased by 43.5% as compared with the control group (Group 12H) after the conditioned cultivation for one day. In Group 21W, for which photoperiod was set at 21 hrs, as well as in Group 24W, for which photoperiod was set at 24 hrs, polyphenol content tended to increase further. After the conditioned cultivation for 3 days, Group 18W, Group 21W and Group 24W exhibited more marked increase in polyphenol content, and increase was also found even in Group 15W, for which photoperiod was set at 15 hrs, and Group 12W, for which the only modification was replacement of the nutrient solution with water, whereas in the control group (Group 12H), polyphenol content rather tended to decrease. After the conditioned cultivation for 5 days, polyphenol content was observed to continuously decrease in the control group, whereas polyphenol content was found to continuously increase in Group 18W, Group 21W, and Group 24W, in linear fashion, and greatly increase also in Group 15W.

[Example 1-3]

Chlorophyll is known to have a effect to accelerate healing of, e.g., skin diseases and burns. And there is a tendency that vegetables with high chlorophyll content, i.e., vegetables which are colored deep green, are generally liked better. Thus, high content of chlorophyll in vegetables would lead to increase of their the commercial value. Furthermore, as a high correlation is known between chlorophyll content and β-carotene content, it is likely that an increase in chlorophyll content would be accompanied by an increase in β-carotene content. B-carotene, when ingested in human body, works like vitamin A, and is known to be a compound useful in suppression of cancer growth and enforcement of immune functions. Considering these, the effect of the method according to the present invention on the content chlorophyll in vegetables was studied.
Leaf lettuce was cultivated (growth cultivation and conditioned cultivation) following the same procedure and conditions as in Example 1-1, and leaved of the lettuce treated with light as described above was measured for chlorophyll content using a chlorophyll meter SPAD502 (mftd by Konica Minolta).

The results are shown in Fig. 6. In Group 18W, for which photoperiod was set at 18 hrs, chlorophyll content increased by 15.2% as compared with the control group (Group 12H) by conditioned cultivation for only 1 day, and a greater increase was observed in Group 21W, for which photoperiod was set at 21 hrs, and Group 24W, for which 24 hrs. By conditioned cultivation for 3 and 5 days, chlorophyll content increased also in Group 15W, for which photoperiod was set at 15 hrs, but increase in chlorophyll content was far more remarkable in Group 18W, Group 21W, and Group 24W.

[Example 2] Study of the concentration of nitrate nitrogen in hydroponic liquid for lettuce

The relation between the concentration of nitrate nitrogen in hydroponic liquid during conditioned cultivation and the nitrate ion content of the plant body was studied.

(Method of cultivation)

As lettuce, leaf lettuce was used. After seeding, hydroponic cultivation (growth cultivation) was performed for 30 days, and the plant bodies raised were allotted to 5 groups at random, and 4 groups of them were subjected to deep flow hydroponic cultivation with hydroponic liquid containing nitrate nitrogen at a concentration of 38-170 ppm (EC = 0.4-1.8 mS/cm), and the remaining group with tap water (concentration of nitrate nitrogen: not more than 1.29 ppm) which replaced the hydroponic liquid, for 4 days with photoperiod set at 18 hrs and intensity of light adjusted to 10000-15000 lux. Then, the plant bodies were harvested and their nitrate ion content was measured by the method described in Example 1.

(Results)

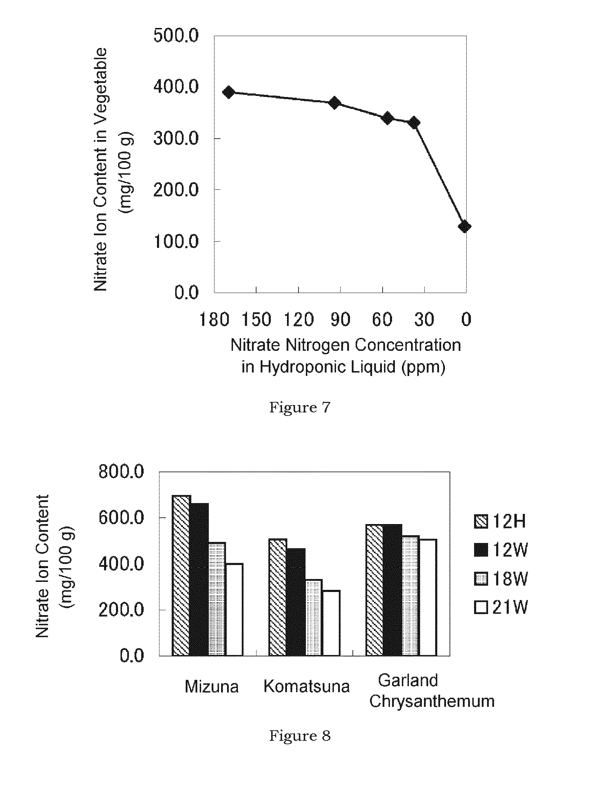

The results are shown in Fig. 7. Compared with the nitrate ion content (about 390 mg/ 100 g) in the plant bodies when cultivated with a hydroponic liquid whose nitrate nitrogen concentration was 170 ppm, nitrate ion content of the plant bodies cultivated with lowered nitrate nitrogen content of 38 ppm decreased only a little, to about 85% (about 330 mg/100g) of initial. On the other hand, its content decreased to about 33% (about 130 mg/ 100 g) of initial in the case where the hydroponic liquid was replaced with tap water. Based on the results, the concentration of nitrate nitrogen in the hydroponic liquid at the step of conditioned cultivation is preferably about 15 ppm for the purpose of the present invention.

[Example 3] Study of the effect of modification to hydroponic liquid and photoperiod on vegetables

Using *Brassica rapa* var. *nipposinica,* "Komatsuna", and garland chrysanthemum, the effect of modification of hydroponic liquid and photoperiod was studied as follows.

(Method of cultivation)

*Brassica rapa* var. *nipposinica,* "Komatsuna", and garland chrysanthemum were subjected to growth culture for 21, 28 and 32 days, respectively, which are the optimum periods for these vegetables. Each of the vegetables then was allotted to 4 groups at random, in 3 groups of which deep flow hydroponic cultivation was continued for 1 day with tap water which replaced the hydroponic liquid and with photoperiod separately set at 12 hrs, 18 hrs, and 21 hrs. The remaining group (Control Group) was subjected to deep flow hydroponic cultivation which was continued for 1 day with photoperiod set at 12 hrs and with the same nutrient solution used as hydroponic liquid (concentration of nitrate nitrogen: 170 ppm, EC =1.8 mS/cm). The plant bodies then were harvested and nitrate ion content, ascorbic acid content and sugar content were measured for each group as described in Example 1.

(Result)

The result is shown in Figs. 8-10.

1. Nitrate ion content

Fig. 8 shows the nitrate ion content of the plant bodies of each group. As seen in the figure, by changing hydroponic liquid to water together with setting photoperiod not less than 18 hrs, decrease in nitrate ion content was observed after conditioned cultivation for only 1 day. With *Brassica rapa* var. *nipposinica,* and "Komatsuna", while a slight (less than 10%) decrease in nitrate ion content was observed even in the groups for which hydroponic liquid was changed to water and photoperiod was set at 12 hrs, far greater decrease in nitrate ion content was observed in the groups for which hydroponic liquid was changed and photoperiod was set at 18 hrs. Further, in all the vegetables, further decrease in nitrate ion content was observed where hydroponic liquid was changed to water and photoperiod was set at 21 hrs.

2. Ascorbic acid content

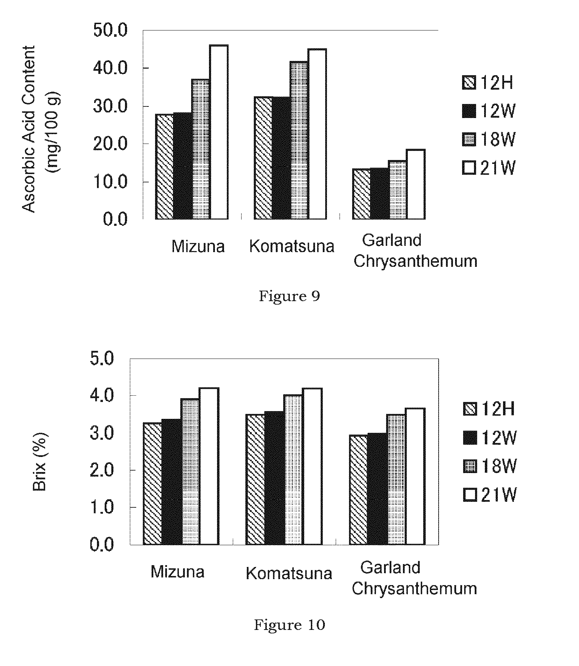

Fig. 9 shows ascorbic acid content of the plant bodied of each group. As seen in the figure, in the group (12W) for which hydroponic liquid was changed to tap water and photoperiod was set at 12 hrs, no increase in ascorbic acid content was observed in any of the plant bodies after cultivation for one day. However, in the group (18W) for which photoperiod was set at 18 hrs along with replacement of hydroponic liquid, content of ascorbic acid markedly increased even after cultivation for only 1 day. The rates of increase in comparison with the control group were 33% in "mizuna", about 28% in "Komatsuna", and about 16% in garland chrysanthemum. Further, in the group (21W) for which photoperiod was set at 21 hrs, increase in ascorbic acid content became more remarkable, with the rates of increase being about 66% in "mizuna" about 39% in "Komatsuna", and about 38% in garland chrysanthemum.

3. Sugar content

Fig. 10 shows the sugar content of the plant bodies of each group. As seen in the figure, in the group for which the hydroponic liquid was changed to tap water and photoperiod set at 12 hrs (Group 12W), only a little increase was observed in sugar content by hydroponic cultivation for one day, whereas in the group (18W) for which photoperiod was set at 18 hrs, sugar content was found increased by not less than 15% in all the plant bodies as compared with the control group. Further, in the group (21 W) for which photoperiod was set at 21 hrs, sugar content was found increased by not less than 20% as compared with the control group.

[Example 4-1] Study of the effects of modification to hydroponic liquid and photoperiod on red lettuce -1

Using leaf lettuce as red lettuce, study was made on the effects of modification to hydroponic liquid and photoperiod.

(Method of cultivation)

The leaf lettuce, after subjected to growth cultivation for 34 days, was allotted to 4 groups at random. For 2 groups (14W, 24W) of them, the hydroponic liquid was changed to tap water and photoperiod was set at 14 hrs and 24 hrs, respectively, and for the remaining 2 groups (14H, 24H), the hydroponic liquid was changed to a nutrient solution whose nitrate nitrogen concentration was 170 ppm, and EC = 1.8 mS/cm, and whose photoperiod was set at 14 hrs and 24 hrs, respectively. All the groups were subjected to cultivation for 4 days. Then, the plant bodies of each group were harvested, and analyzed and evaluated for the following items.

(Items for evaluation and method of evaluation)

1. Measurement of anthocyanin content

To 1 g of the sample, which had been prepared by freezing the plant body in liquid nitrogen and then pulverizing it, was added 10 ml of 1% HCl-methanol, and the mixture was let stand in a refrigerator overnight to extract anthocyanins. Then, after centrifugation at 3000 rpm for 10 minutes, absorbance was measured at 530 nm and 657 nm on a spectrometer (UV-160, Shimadzu Corp.). Anthocyanin content was determined as the amount from which the effect of chlorophyll on the absorbance was subtracted according to the following calculation formula (Reference: Plant Physiol. (1991) 96, 1079-1085).

$$\text{Anthocyanin content } A'_{530} = A_{530} - A_{657} \times 0.25$$

2. Hue value analysis

Hue values represent variations in hue, and can be used in evaluation of red color development in external appearance. Photographic images (640 $\times$ 480 pixels) of plant bodies were taken from right above at a distance of 70 cm by a digital camera ($\mu$725SW: mftd by OLYMPUS) under a constant lighting condition. Each photographic image was separated onto 3 color planes, from which hue value was measured as the average of the whole image based on color information from the pixels in the region corresponding to lettuce.

3. Measurement of total sugar content

To 1 g of the sample, which had been prepared by freezing the plant body in liquid nitrogen and then pulverizing it, was added 10 ml of distilled water, and the mixture was heated at 95° C for 1 hour for extraction. To the analyte, which was diluted to a proper concentration, was added an equal volume of 5% phenol solution, and then 2.5 volumes of conc. sulfuric acid, and the mixture was stirred immediately. The mixture was let stand for 20 minutes at room temperature, and its absorbance at 490 nm was measured on a spectrometer (UV-160: mftd by Shimadzu Corp.). Total sugar content was calculated using a standard curve produced with a standard solution (glucose aqueous solution).

(Results)

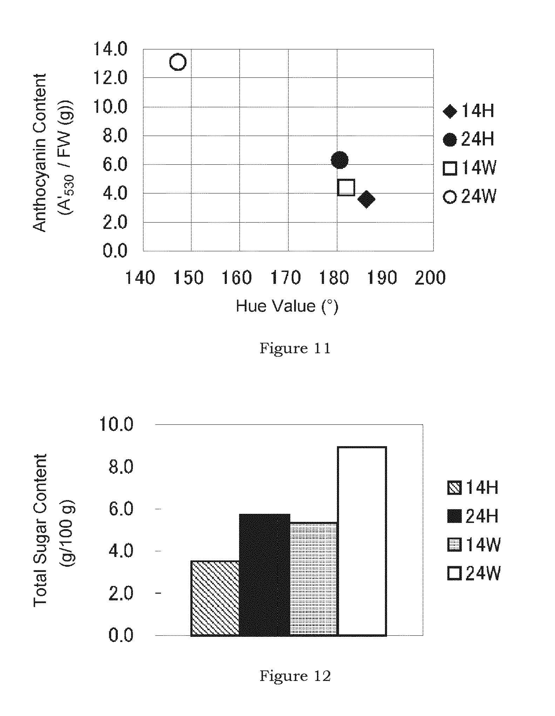

The results are shown in Figs. 11 and 12.

1. Anthocyanin content and hue value

In the group (24W) for which the hydroponic liquid was changed to tap water and photoperiod set at 24 hrs, anthocyanin content greatly increased, i.e., 3.6 times that of the control group (14H), and its hue value, which is an index of color in external appearance, showed a shift toward red by about 40°, also exhibiting the color red lettuce visually. In contrast, in either of the group (14W) for which the only modification was change of hydroponic liquid to tap water, and the group (24H) for which the only modification was extension of the photoperiod to 24 hrs, increase in anthocyanin content of the plant bodies was limited, i.e., up to about 1.2 times in the former and up to about 1.8 times in the latter, with a shift of hue value by only 5° toward red and only a little development of the color visually perceived. This indicates that combination of changing hydroponic liquid to water and extending photoperiod is quite effective to induce a sufficient increase in anthocyanin content and sufficient development of red color.

2. Total sugar content

The results are shown in Fig. 12. Total sugar content of the plant body was found greatly increased in the group for which the hydroponic liquid had been changed to tap water and photoperiod had been set at 24 hrs (24W), i.e., about 2.5 times the content observed in the control group (14H). Compared with this, in the group (14W) for which the only modification was the change of the hydroponic liquid to tap water and the group (24H) for which the only modification was setting photoperiod at 24 hrs, increase in total sugar content of the plant body was only 1.5 to 1.6 times the content observed in the control group. This indicates that combination of changing hydroponic liquid to water and extending photoperiod is quite effective to induce sufficient increase in total sugar content, a source of various beneficial ingredients.

[Example 4-2] Study of the effects of modification to hydroponic liquid and photoperiod on red lettuce -2

As in Example 4-1, leaf lettuce, after subjected to growth cultivation for 32 days, was allotted to 7 groups at random, for 5 groups of which the hydroponic liquid was changed to tap water and their photoperiod was set at 12 hrs (12W), 15 hrs (15W), 18 hrs (18W), 21 hrs (21W), and 24 hrs (24W), respectively. For the remaining 2 groups, the hydroponic liquid was changed to a nutrient solution whose nitrate nitrogen concentration was 170 ppm, and EC =1.8 mS/cm, and whose photoperiod was set at 12 hrs and 24 hrs, respectively (12H, 24H). The plant bodies of all groups were cultivated for 1 to 3 days, and their anthocyanin content and hue value were measured at the time points 1 and 3 days of the cultivation, by the method described in Example 4-1.

(Results)

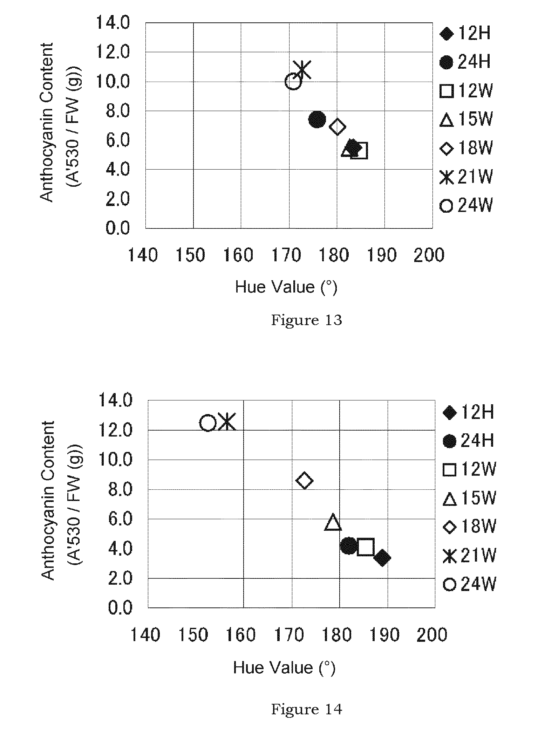

The results are shown in Figs. 13 and 14.
Fig. 13 shows the results after cultivation for 1 day, and Fig. 14 shows the results after cultivation for 3 days. In the group (18W) for which the hydroponic liquid was changed to tap water and photoperiod set at 18 hrs, anthocyanin content of the plant bodies was found increased by about 26% and the hue value shifted toward red, as compared with the control group (12H). In the group (21W) for which the hydroponic liquid was changed to tap water and photoperiod set at 21 hrs, anthocyanin content and hue value of the plant bodies both greatly increased, and red color developed in the leaves was visually perceived, after cultivation for 1 day,. Further, after cultivation for 3 days, not less than 2.5 times increase in anthocyanin content and not less than 15° of shift in hue value toward red were observed in the former (18W), and not less than 3.5 times increase in anthocyanin content and not less than 30° of shift in hue value toward red in the latter (21 W), and in both, red color was found deeper. On the other hand, in the group (24H) for which the nutrient solution was used as hydroponic liquid and photoperiod set at 24 hrs, though an improvement was noticed both in anthocyanin content and in hue value after cultivation of 1 day, their anthocyanin content and hue value both returned to levels similar to those observed in the control group (12H).

[Example 5] Study of the relation between intensity of light and the effect to lower nitrate ion content in conditioned cultivation of red lettuce.

Using red lettuce, relation between intensity of light with photoperiod set at 24 hrs and the effect to lower nitrate ion in the plant body was studied when hydroponic cultivation was performed in which the hydroponic liquid was changed to water.

(Methods)

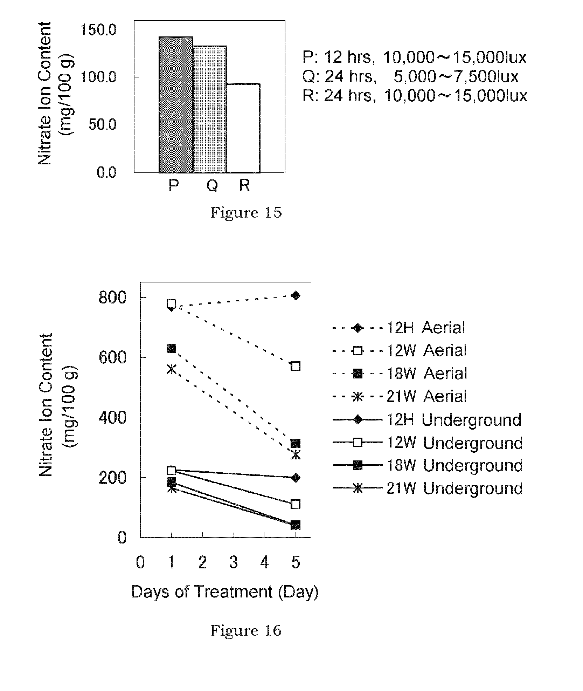

Red lettuce which had been subjected to growth cultivation as in Example 4-1 was then divided into 3 groups at random. The hydroponic liquid was changed to water for each group and the red lettuce was cultivated for 4 days with light intensity and photoperiod set at 10000 to 15000 lux and 12 hrs (Group P), 5000 to 7500 lux and 24 hrs (Group Q), and 10000 to 15000 and 24 hrs (Group R), respectively. The nitrate ion content of the plant bodies then was measured.
The results are shown in Fig. 15. As to nitrate ion content of the plant bodies, in comparison with the value of 142 mg/100 g observed in Group P, for which light intensity was set at 10000 to 15000 lux and photoperiod at 12 hrs, Group Q, for which light intensity was set at 5000 to 7500 and photoperiod at 24 hrs, showed a decrease by only about 7%, i.e., a decrease to 133 mg/100 g, whereas Group R, for which light intensity was set at 10000 to 15000 and photoperiod at 24 hrs, showed a remarkable decrease by about 35%, i.e., down to 93 mg/ 100 g. Visually, too, while no improvement in development of red color was observed in the leaves of Group Q, remarkable red color was observed to develop in Group R. These results indicate that no substantial effect is obtained at light intensity of 5000 to 75000 lux.

[Example 6] Study of the effect of modifying hydroponic liquid and photoperiod on turnip -1

To investigate whether the method according to the present invention is effective on plant's nutrients reserve organs (sing sites), an examination was carried out about how nitrate ion content and sugar value of swollen roots would be changed by modification to hydroponic liquid and photoperiod. Namely, seeds of turnip were seeded and subjected to growth cultivation for 28 days, and then, some of them being allotted to the control group (12H), for which the use of the nutrient solution was continued and photoperiod was set at 12 hrs, and the rest being allotted to groups for which the hydroponic liquid was changed to tap water and photoperiod was set at 12 hrs, 18 hrs, or 21 hrs (Group 12H, Group 18H, or Group 21H, respectively), deep flow hydroponics were continued for further 1 or 5 days. Meanwhile, light intensity was set at 10000 to 15000 lux. Then, the leaves, stems (aerial part), and swollen roots (underground swollen part) of the plant bodies were separately harvested, and measurement was made for nitrate ion content of each part and for sugar content of the underground swollen part.

(Results)

1. Nitrate ion content:

The results are shown in Fig. 16. Nitrate ion content was found decreased after cultivation for one day in the groups for which the hydroponic liquid was changed to water and photoperiod set at 18 hrs or 21 hrs (Group 18W and Group 21W, respectively), as in the case of leaf vegetables, by more than 18%, both in the aerial parts and underground swollen parts, as compared with the control group and the decrease in nitrate ion content became more remarkable after cultivation for 5 days.

2. Sugar content (Brix (%))

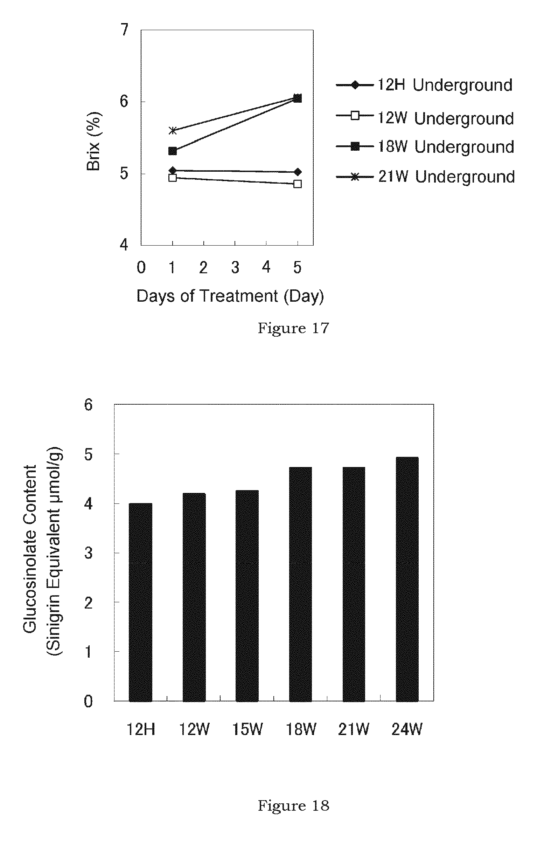

The results are shown in Fig. 17. In Group 18W and 21W, sugar content increased not less than 5.4% greater than the control group after cultivation for only 1 day, and, it further increased greatly after cultivation for 5 days. In contrast, in the group (12W) for which photoperiod was set at the same 12 hrs as the control group and the only modification was the change of the hydroponic liquid to water, no increase in sugar content was noted.

[Example 7] Study of the effect of hydroponic liquid and photoperiod on glucosinolate content

Glucosinolates, which are mustard oil glycosides contained mainly in plants of *Brassicaceae*, such as kale, are precursors of isothiocyanates, which are the hot flavor ingredients in Japanese raddish (*Raphanus sativus* var. *longipinnatus*) and Japanese horseradish (*Wasabia japonica*). These ingredients are known to reinforce detoxifying function and have anticancer activities. It is known that most of the glucosinolates contained in kale is represented by sinigrin, which has a digestive effect as well as a diuretic effect on human body. To increase the content of this ingredient would lead to enhance its special flavor. Thus, a study was made of the effect of the method according to the present invention on the content of glucosinolates in kale.

Kale was subjected to growth cultivation following the same procedure and conditions as in Example 1-1 for an optimal period of 30 days, and then divided into 6 groups at random, 5 of which was subjected to deep flow hydroponic cultivation in for one day in which the hydroponic liquid was changed to tap water and photoperiod was set at 12 hrs, 15 hrs, 18 hrs, 21 hrs or 24 hrs, respectively (Group 12W, Group 15W, Group 18W, Group 21W, and Group 24W, respectively). The remaining one group (12H) was subjected as a control to deep flow hydroponic cultivation with photoperiod set at 12 hrs and with the same nutrient solution (nitrate nitrogen content: 170 ppm, EC = 1.8 mS/cm) as hydroponic liquid. The plant bodies then were harvested, and their glucosinolate content of was measured by the following method.

To 0.5 g of a sample, which had been prepared by freezing the plant body in liquid nitrogen and then pulverizing it, was subjected to a process (1) in which 2.5 ml of hot 70% methanol was added to the sample, and the mixture was heated to 75° C for 10 minutes, centrifuged at 3000 rpm or 2 minutes to collect the supernatant. This process (1) was performed three times, and an extract solution was thus obtained. The content of glucosinolates in this extract solution was measured by a palladium colorimetric method. Namely, to 0.5 ml of the extract solution was added 3 ml of 2 mM palladium chloride, and the mixture was let stand for 30 minutes, and then absorbance at 425 nm was measured on a spectrophotometer (UV-160; mftd by Shimadzu Corp.). Using sinigrin as a reference, the content of glucosinolates in the sample was calculated in sinigrin equivalent ($\mu$mol/g). Separately, groups for which the hydroponic liquid was changed to tap water and photoperiod was set at 12 hrs or 24 hrs (Group 12H or Group 24H, respectively), as well as a control group for which photoperiod was set at 12 hrs and the same nutrient solution was used as hydroponic liquid, were subjected to deep flow hydroponic cultivation for 3 days, and the plant bodies were harvested and their nitrate ion content was measure for each group d by the same method as in Example 1-1.

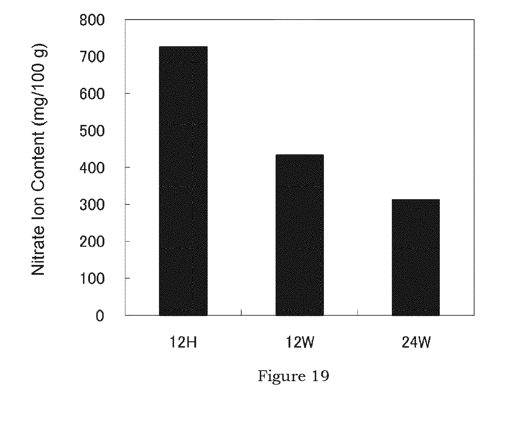

The results of glucosinolates are shown in Fig. 18. In the groups for which the hydroponic liquid was changed to water and photoperiod was seta at 18 hrs, 21 hrs, or 24 hrs (Group 18W, Group 21W, or Group 24W), content of glucosinolates increased by not less than 18% after the treatment for only 1 day. The nitrate ion content is shown in Fig. 19. While the treatment for 3 days led to a decrease by 40% in Group 12W, for which the only modification was made to the hydroponic liquid, the treatment successfully led to a decrease by 57% in the group for which photoperiod was also changed (24W). As this difference shows the same tendency as observed in the test performed on lettuce in Example 1-1, conditioned cultivation of this plant species will show similar results to those shown in Example 1-1.

INDUSTRIAL APPLICABILITY

The present invention can be utilized to produce hydroponically cultivated vegetables in which the content of beneficial ingredients (nutritious ingredients, flavor ingredients, and the like), such as ascorbic acid, sugar, glucosinolates, polyphenol, chlorophyll, etc., is rapidly increased, and whose nitrate ion content is lowered. Furthermore, the present invention can be utilized to produce leaf vegetables with improved leaf thickness and depth in leaf color, as well as to produce vegetables vividly colored by causing increase in their anthocyanin content, without requiring installation of additional light sources, like blue light sources.

**Claims**

1.   A method for production of a vegetable by hydroponic cultivation under artificial lighting, wherein the method is **characterized in that** the vegetable, after having grown and immediately before harvesting thereof, is subjected to conditioned cultivation for a period of not less than one day in which the vegetable is hydroponically cultivated with water instead of a nutrient solution and with photoperiod set at not less than 17 hours.

2.   The method for production according to claim 1, wherein the period of the conditioned cultivation is not less than 2 days.

3.   The method for production according to claim 1 or 2, wherein the photoperiod is not less than 20 hours.

4.   The method for production according to one of claims 1 to 3, wherein the period of the conditioned cultivation is not more than 7 days.

5.   The method for production according to one of claims 1 to 4, wherein the intensity of light during the photoperiod is at least 9000 lux.

6.   The method for production according to one of claims 1 to 5, wherein nitrate ion content of the vegetable decreases during the conditioned cultivation.

7.   The method for production according one of claims 1 to 6, wherein the content of sugar, total sugar, ascorbic acid, anthocyanins, polyphenols, chlorophyll, and/or glucosinolates increases during the conditioned cultivation.

8.   A vegetable produced by the method for production according to one of claims 1 to 7.

Figure 1

Figure 2

Figure 3

Figure 4

Figure 5

Figure 6

Figure 7

Figure 8

Figure 9

Figure 10

Figure 11

Figure 12

Figure 13

Figure 14

P: 12 hrs, 10,000~15,000lux
Q: 24 hrs, 5,000~7,500lux
R: 24 hrs, 10,000~15,000lux

Figure 15

- - ◆ - - 12H Aerial
- - □ - - 12W Aerial
- - ■ - - 18W Aerial
- - ✳ - - 21W Aerial
——◆—— 12H Underground
——□—— 12W Underground
——■—— 18W Underground
——✳—— 21W Underground

Days of Treatment (Day)

Figure 16

Figure 17

Figure 18

Figure 19

## INTERNATIONAL SEARCH REPORT

| | International application No. |
|---|---|
| | PCT/JP2010/059376 |

A. CLASSIFICATION OF SUBJECT MATTER
*A01G31/00*(2006.01)i, *A01G7/00*(2006.01)i

According to International Patent Classification (IPC) or to both national classification and IPC

B. FIELDS SEARCHED

Minimum documentation searched (classification system followed by classification symbols)
A01G31/00, A01G7/00

Documentation searched other than minimum documentation to the extent that such documents are included in the fields searched
Jitsuyo Shinan Koho          1922-1996    Jitsuyo Shinan Toroku Koho    1996-2010
Kokai Jitsuyo Shinan Koho     1971-2010    Toroku Jitsuyo Shinan Koho    1994-2010

Electronic data base consulted during the international search (name of data base and, where practicable, search terms used)
JSTPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| Y | Masaharu MASUDA, "Piman no Ketsujitsu Hidai ni Oyobosu Keikoto Renzokuko to Anki Chudan no Eikyo", Shokubutsu Kojo Gakkaishi, 2002, vol.14, no.3, 147 to 151 | 1-8 |
| Y | JP 2008-61570 A  (Canyon Biotechnology Co., Ltd.), 21 March 2008 (21.03.2008), paragraphs [0017], [0022] to [0023] (Family: none) | 1-8 |
| A | JP 11-69920 A  (Japan Tobacco Inc.), 16 March 1999 (16.03.1999), entire text (Family: none) | 1-8 |

☒  Further documents are listed in the continuation of Box C.      ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 August, 2010 (27.08.10) | 07 September, 2010 (07.09.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/059376

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-53976 A  (Hoshizaki Electric Co., Ltd.), 08 March 2007 (08.03.2007), entire text; all drawings (Family: none) | 1-8 |
| A | JP 2005-245243 A  (Ryoto Hiryo Kabushiki Kaisha), 15 September 2005 (15.09.2005), entire text (Family: none) | 1-8 |
| A | JP 6-105625 A  (Shikoku Research Institute Inc.), 19 April 1994 (19.04.1994), entire text; all drawings (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004305040 A
- JP 2008086272 A
- JP H6105625 B
- JP 2003204718 A
- JP 2005245243 A
- JP H06105625 B

**Non-patent literature cited in the description**

- *Plant Physiol.,* 1991, vol. 96, 1079-1085